# EUROPÄISCHE PATENTANMELDUNG

(11) **EP 1 039 208 A1**
(43) Veröffentlichungstag der Anmeldung: **27.09.2000**
(21) Anmeldenummer: 00106105.0
(22) Anmeldetag: 21.03.2000
(51) Int. Cl.: F16N 7/04

(54) **Nachschmiereinrichtung für Lagerstellen**

(30) Priorität: 23.03.1999 DE 19912901
(71) Anmelder: FAG OEM und Handel AG, 97421 Schweinfurt (DE)
(72) Erfinder: Brand, Armin, 97688 Bad Kissingen (DE); Weigand, Michael, Dr., 97725 Elfershausen (DE)

(57) **Zusammenfassung**

Nachschmiereinrichtung , insbesondere für Maschinen mit einer schwingungsbeanspruchten Lagerung wie z.B. Schwingsiebe, Sägegatter, Rüttler oder Vibratoren.

Um eine Nachschmiereinrichtung zu schaffen, die bei einem einfachen und unkomplizierten Aufbau eine bedarfsgerechte Versorgung der Lagerung mit Schmierstoff sicherstellt und eine Verschwendung von Schmierstoff vermeidet, wird vorgeschlagen, daß der Vorratsbehälter (1) am schwingenden Maschinenteil (8) angeordnet ist und eine auf den Schmierstoff (2) einwirkende Scheibe (3) aufweist, wobei die Scheibe, aufgrund der phasenverschobenen Schwingung zwischen ihr und dem Vorratsbehälter, den Schmierstoff (2) in den Kanal (4) drückt.

## Beschreibung

### Gebiet der Erfindung

Die Erfindung betrifft eine Nachschmiereinrichtung nach dem Oberbegriff des Anspruchs 1.

### Hintergrund der Erfindung

Wälzlager, insbesondere für Maschinen mit einer schwingungsbeanspruchten Lagerung wie z.B. Schwingsiebe, Sägegatter, Rüttler oder Vibratoren bedürfen einer besonders sorgfältigen Versorgung mit Schmierstoff, da wegen der schwingenden Bewegung der Belastungspunkt in der Lagerung umlaufend ist und so der Aufbau eines kontinuierlichen Schmierfilmes im Wälzlager erschwert wird. Aus diesem Grund werden an solchen Lagerstellen Nachschmiereinrichtungen vorgesehen, die die Schmierstoffversorgung sicherstellen sollen.

So ist in der EP 0 256 565 A1 eine Nachschmiereinrichtung gezeigt, die über ein elektrisch ansteuerbares Ventil die Schmierstoffzufuhr regelt. Eine solche Einrichtung ist aufwendig und teuer.

Aus der EP 0 598 678 A1 ist ein Schmierstoffgeber bekannt, welcher mittels Federdruck Schmierstoff aus einer Auslaßöffnung stößt. Die Schmierstoffabgabe erfolgt durch eine Steuerung zeitlich kontrolliert und unabhängig von inneren und äußeren Bedingungen über einen im Voraus bestimmbaren Zeitraum. Ein solcher Schmierstoffgeber hat den Nachteil, daß er den aktuellen Schmierstoffbedarf des Lagers nich berücksichtigt und das Lager auch dann schmiert, wenn es gar nicht in Betrieb ist.

Schließlich ist aus der US-PS 3,804,476 noch eine Lageranordung bekannt, die von einem Vorratsbehälter mit Schmierstoff versorgt wird, wobei die Schmierstoffzufuhr durch einen Absperrhahn gesperrt werden kann. Dabei besteht die Gefahr, daß vergessen werden kann, die Schmierstoffzufuhr bei Betrieb der Anlage zu öffnen, so daß das Lager trocken laufen kann, oder daß nach Stillsetzen der Anlage vergessen wird, die Schmierstoffzufuhr zu schließen und so Schmierstoff vergeudet wird.

### Aufgabe der Erfindung

Es ist deshalb Aufgabe der Erfindung, eine Nachschmiereinrichtung aufzuzeigen, die bei einfachem und unkompliziertem Aufbau eine bedarfsgerechte Versorgung der Lagerung mit Schmierstoff sicherstellt und eine Verschwendung von Schmierstoff vermeidet.

### Beschreibung der Erfindung

Die Lösung dieser Aufgabe gelingt mit den im kennzeichnenden Teil des Anspruchs 1 angegebenen Merkmalen. Vorteilhafte Weiterbildungen sind in den Ansprüchen 2 bis 4 angegeben.

Die Erfindung nutzt die Tatsache aus, daß der Vorratsbehälter bei Maschinenbetrieb mitschwingt und aufgrund der Massenträgheitskraft der Scheibe auf den Schmierstoff bei jedem Schwingtakt eine Kraft ausgeübt wird, die ihn durch den Kanal zum Lager befördert. Die Dosierung kann z.B. durch eine Lochblende oder eine Drossel auf den jeweiligen Anwendungsfall abgestimmt werden. Bei Stillstand der Anlage wirkt dagegen nur die Gewichtskraft der Masse der Scheibe auf den Schmierstoff ein, so daß bei entsprechender Auslegung des Kanals kein Schmierstoff austritt.

### Kurze Beschreibung der Zeichnung

Die erfindungsgemäße Nachschmiereinrichtung soll an einem Ausführungsbeispiel näher erläutert werden.
- Figur 1: zeigt schematisch eine Nachschmiereinrichtung und ihre Anordnung an einer schwingenden Maschine.
- Figur 2: zeigt schematisch eine Variante der Nachschmiereinrichtung mit einem durch die Schwingbewegung sich öffnenden und schließenden Ventil.

### Detaillierte Beschreibung der Zeichnung

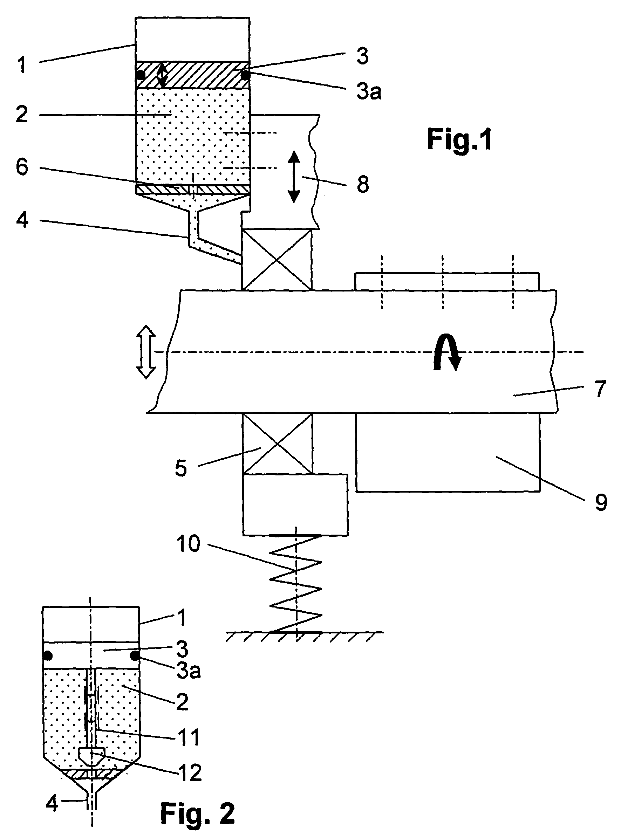

In Figur 1 ist der Vorratsbehälter mit 1 bezeichnet. In ihm befindet sich der Schmierstoff 2, der von einer darüberliegenden Scheibe 3 abgedeckt ist. Ein Kanal 4 führt zu der Lagerung 5, wobei über eine Lochblende 6 die zwischen Vorratsbehälter 1 und Kanal 4 angeordnet ist, die Menge des austretenden Schmierstoffs einstellbar ist. Die Lagerung 5 stützt eine Welle 7 in einem Gehäuse 8 ab, wobei eine Unwuchtmasse 9 auf der Welle 7 angeordnet ist und das Gehäuse 8 über eine Feder 10 schwingungsfähig gehalten ist. Wenn sich nun im Betrieb die Welle 7 dreht, erzeugt die Unwucht 9 eine senkrechte Schwingbewegung der Maschine, die sich auch auf den Vorratsbehälter 1 und die Scheibe 3 überträgt. Infolge der Massenträgheitskraft der Scheibe 3 wird auf den Schmierstoff 2 im Vorratsbehälter 1 eine Kraft ausgeübt, die ihn durch den Kanal 4 zur Lagerung 5 drückt. Bei Stillstand der Maschine hingegen wirkt nur das Gewicht der Scheibe 3 auf den Schmierstoff, wobei z. B. durch entsprechende Auslegung der Dichtung 3a diese Gewichtskraft kompensiert werden kann. Ein Schmierstoffaustritt bei Stillstand wird so zuverlässig vermieden.

Figur 2 zeigt eine Variante eines Vorratsbehälters. Dabei ist die Scheibe 3 mit einem Steuerstab 11 versehen, der über ein Ventil 12 den Kanal 4 bei Stillstand verschließt. Im Betrieb dagegen ergibt sich durch die Auf- und- Abbewegung der Maschine und der Scheibe 3 ein Öffnen des Kanals 4 und durch die folgende Abwärtsbewegung eine Art Pumpeffekt, der den Schmierstoff zuverlässig zur Lagerung pumpt. Um die Lageänderung bei abnehmendem Schmierstoffvorrat auszugleichen, ist der Steuerstab 11 als Teleskopstange ausgeführt.

### Bezugszeichenliste

- 1: Vorratsbehälter
- 2: Schmierstoff
- 3: Scheibe, bzw. Teil auf dem Schmierstoff
- 3a: Dichtung am Außendurchmesser von 3
- 4: Kanal
- 5: Lagerung
- 6: Lochblende
- 7: Welle
- 8: Gehäuse
- 9: Unwucht
- 10: Federung des Maschinensystems
- 11: Steuerstab als Teleskopstange
- 12: Verschließendes Ventil

## Patentansprüche

1. Nachschmiereinrichtung, insbesondere für Maschinen mit einer schwingungsbeanspruchten Lagerung, wobei der Schmierstoff aus einem Vorratsbehälter über einen Kanal der Lagerung zugeführt wird, **dadurch gekennzeichnet**, daß der Vorratsbehälter (1) am schwingenden Maschinenteil (8) angeordnet ist und ein auf den Schmierstoff (2) einwirkendes Teil (3) aufweist, welches den Schmierstoff (2) durch die Schwingungsunterschiede zwischen dem Teil (3) und dem Vorratsbehälter (1) in den Kanal (4) drückt.

2. Nachschmiereinrichtung nach Anspruch 1, **dadurch gekennzeichnet**, daß die Schmierstoffmenge über eine Lochblende (6) oder Drossel, die zwischen dem Vorratsbehälter (1) und Lagerung angeordnet ist, dosiert wird.

3. Nachschmiereinrichtung nach Anspruch 1, **dadurch gekennzeichnet**, daß das Teil (3) auf ein den Kanal (4) verschließendes Ventil (12) einwirkt und dieses zeitweise öffnet.

4. Nachschmiereinrichtung nach Anspruch 1, **dadurch gekennzeichnet**, daß das Teil (3) als eine Stahl- oder Bleischeibe ausgebildet ist, welche im Vorratsbehälter (1) oberhalb des Schmierstoffs (2) angeordnet ist und am Außendurchmesser mit einer Dichtung (3a) versehen ist.
